# EUROPÄISCHE PATENTSCHRIFT

(11) **EP 4 059 747 B1**
(45) Veröffentlichungstag und Bekanntmachung des Hinweises auf die Patenterteilung: **03.09.2025**
(21) Anmeldenummer: 22159640.6
(22) Anmeldetag: 02.03.2022
(51) Int. Cl.: B60H 1/32, B60H 1/00

(54) **THERMOMANAGEMENTSYSTEM FÜR EIN KRAFTFAHRZEUG MIT EINEM TEMPERIERSYSTEM UND EINEM DAVON SEPARIERTEN TRANSFERSYSTEM**
THERMAL MANAGEMENT SYSTEM FOR A MOTOR VEHICLE WITH A TEMPERATURE CONTROL SYSTEM AND A TRANSFER SYSTEM SEPARATED THEREFROM
SYSTÈME DE GESTION THERMIQUE POUR UN VÉHICULE AUTOMOBILE DOTÉ D'UN SYSTÈME DE THERMORÉGULATION ET D'UN SYSTÈME DE TRANSFERT SÉPARÉ DE CEUX-CI

(30) Priorität: 10.03.2021 DE 102021105751
(43) Veröffentlichungstag der Anmeldung: 21.09.2022
(73) Patentinhaber: VOLKSWAGEN AG, 38440 Wolfsburg (DE)
(72) Erfinder: Meier, Markus, 38640 Goslar (DE); Lüders, Ralf, 31224 Peine (DE); Ehrhardt, Felix, 38640 Goslar (DE); Sawall, Philipp, 31141 Hildesheim (DE); Schiller, Heino, 38122 Braunschweig (DE); Duwald, Jakob, 38176 Wendeburg (DE)
(74) Vertreter: Bungartz, Florian

(56) Entgegenhaltungen:
- DE-A1- 102012 108 043
- DE-A1- 102014 111 971
- US-A1- 2017 253 105
- US-A1- 2018 312 034
- US-A1- 2019 047 352

## Beschreibung

Die Erfindung betrifft ein Kraftfahrzeug, insbesondere ein Elektrofahrzeug, d.h. ein ausschließlich mittels mindestens eines elektrischen Traktionsmotors antreibbares Kraftfahrzeug. Konkret betrifft die Erfindung ein Thermomanagementsystem eines solchen Kraftfahrzeugs, mittels dessen einerseits eine Temperierung, d.h. bedarfsweise eine Kühlung oder Erwärmung, von Funktionskomponenten und andererseits eine Temperierung eines Innenraums des Kraftfahrzeugs möglich ist.

Ein besonderer Fokus bei der Ausgestaltung eines Thermomanagementsystems für ein Elektrofahrzeug liegt darin, den Verbrauch an elektrischer Energie für die Temperierung sowohl der Funktionskomponenten als auch des Innenraums möglichst gering zu halten, was u.a. dadurch erreicht werden kann, dass möglichst viel von der bei der Temperierung an einer Stelle anfallenden Abwärme für eine Temperierung an anderer Stelle genutzt wird, so dass in diesem Umfang auf eine aktive, insbesondere elektrische Erzeugung von Wärmeenergie verzichtet werden kann.

Bekannt ist, ein Klimaanlagensystem, mittels dessen eine Kühlung insbesondere des Innenraums durchgeführt werden kann, bedarfsweise als Wärmepumpe zu nutzen, um anfallende Abwärme für eine Temperierung an anderer Stelle zu nutzen. Ein solches Klimaanlagensystem für ein elektrisches Kraftfahrzeug ist in der US 2019/0092121 A1 offenbart.

Die US 2019/047352 A1 offenbart ein Kraftfahrzeug mit einem Thermomanagementsystem, das ein Temperiersystem umfasst, in das eine Mehrzahl von zu temperierenden Funktionskomponenten, ein Umgebungswärmetauscher und ein Heizungswärmetauscher sowie zwei Verbindungwärmetauscher integriert sind. Weiterhin ist ein von dem Temperiersystem fluidisch getrenntes Transfersystem vorgesehen, dass die Verbindungswärmetauscher ebenfalls integriert.

Die DE 10 2012 108 043 A1 beschreibt ein Kraftfahrzeug mit einem Thermomanagementsystem, das ein Temperiersystem und ein davon fluidisch getrenntes Transfersystem umfasst, die über insgesamt drei Verbindungswärmetauscher miteinander gekoppelt sind.

Die DE 10 2014 111 971 A1 offenbart ein Kraftfahrzeug mit einem Thermomanagementsystem, das ein Temperiersystem und ein davon fluidisch getrenntes Transfersystem umfasst, die über zwei Verbindungswärmetauscher miteinander gekoppelt sind.

Der Erfindung liegt die Aufgabe zugrunde, ein Thermomanagementsystem für ein Kraftfahrzeug und insbesondere ein Elektrofahrzeug anzugeben, das eine vorteilhafte Temperierung sowohl von Funktionskomponenten als auch eines Innenraums des Kraftfahrzeugs ermöglicht.

Diese Aufgabe ist bei einem Kraftfahrzeug gemäß dem Patentanspruch 1 gelöst. Vorteilhafte Ausgestaltungsformen des Kraftfahrzeugs sind Gegenstände der weiteren Patentansprüche und ergeben sich aus der nachfolgenden Beschreibung der Erfindung.

Erfindungsgemäß ist ein Kraftfahrzeug mit einem Thermomanagementsystem vorgesehen, wobei das Thermomanagementsystem einerseits ein Temperiersystem umfasst, in das zumindest eine Mehrzahl von zu temperierenden Funktionskomponenten, ein Umgebungswärmetauscher und ein (erster) Heizungswärmetauscher, durch den Luft, die einem Innenraum des Kraftfahrzeugs zugeführt werden soll, temperierbar ist, integriert sind. Die Funktionskomponenten sind dabei vorzugsweise zumindest zwei aus einer Gruppe, die folgende Funktionskomponenten umfasst:
- einen elektrischen Traktionsmotor, d.h. einen Elektromotor, mittels dessen zumindest ein Teil und zumindest zeitweise, gegebenenfalls (stets) die gesamte Antriebsleistung für das Fahren des Kraftfahrzeugs bereitgestellt wird;
- eine Leistungselektronik, insbesondere zur Ansteuerung des Traktionsmotors; diese kann insbesondere einen Pulswechselrichter umfassen;
- eine Traktionsenergiequelle, d.h. eine Energiequelle für elektrische Energie, die dem Traktionsmotor für den Antrieb des Kraftfahrzeugs zur Verfügung gestellt wird; die Traktionsenergiequelle kann dabei insbesondere eine Speichervorrichtung für elektrische Energie (Traktionsbatterie) oder ein beliebiger Generator für elektrische Energie, beispielsweise eine Brennstoffzelle, sein;
- ein Ladegerät, insbesondere ein Ladegerät für eine als Traktionsbatterie ausgestaltete Traktionsenergiequelle, wobei das Ladegerät insbesondere auch eine Schnittstelle für einen Anschluss an eine externe, d.h. außerhalb des Kraftfahrzeugs gelegene Energiequelle aufweisen kann; und
- eine Thermomanagementsystemsteuerung, d.h. eine Steuerungsvorrichtung, durch die zumindest ein Verteilsystem des Thermomanagementsystems ansteuerbar ist; dabei kann die Thermomanagementsystemsteuerung in eine zentrale Steuerungsvorrichtung des Kraftfahrzeugs (funktional) integriert sein.

Vorgesehen ist, dass jede der Funktionskomponenten und der Heizungswärmetauscher mittels des Verteilsystems des Thermomanagementsystems wechselweise (d.h. mit entweder dem einen oder dem anderen) mit sowohl einem ersten Verbindungswärmetauscher (beziehungsweise einer ersten Wärmetauschseite davon) als auch einem zweiten Verbindungswärmetauscher (beziehungsweise einer ersten Wärmetauschseite davon) zur Ausbildung von Temperierkreisen, in denen jeweils ein Temperierfluid mittels einer oder mehrerer Temperierfluidfördervorrichtungen im Kreislauf förderbar ist, verbindbar sind, wobei das Verteilsystem eine erste Verteilvorrichtung, die ausschließlich mit dem ersten Verbindungswärmetauscher (d.h. nicht auch mit dem zweiten Verbindungswärmetauscher) verbunden oder verbindbar ist, und eine zweite Verteilvorrichtung, die ausschließlich mit dem zweiten Verbindungswärmetauscher (d.h. nicht auch mit dem ersten Verbindungswärmetauscher) verbunden oder verbindbar ist, umfasst. Die erste Verteilvorrichtung und/oder die zweite Verteilvorrichtung kann/können dabei vorzugsweise als Drehschieberventil (beispielsweise mit einem kugelförmigen oder zylindrischen Ventilkörper) und/oder als Linearschieberventil (beispielsweise als Folienschieberventil) ausgestaltet sein. Dabei können die beiden Verteilvorrichtungen voneinander separiert beziehungsweise eigenständig ausgestaltet sein. Eine integrale Ausgestaltung und insbesondere eine Anordnung innerhalb desselben Gehäuses kann jedoch ebenfalls vorteilhaft umgesetzt sein. Vorzugsweise ist den Verteilvorrichtungen jeweils ein eigner, aktiv ansteuerbarer, insbesondere elektrischer Aktor zugeordnet, um eine unabhängige Ansteuerung der Verteilvorrichtungen zu ermöglichen.

Weiterhin ist der Umgebungswärmetauscher zumindest in einen den ersten Verbindungwärmetauscher umfassenden Temperierkreis integriert oder integrierbar. Dabei kann vorgesehen sein, dass das Temperierfluid, das den oder die entsprechenden (d.h. den ersten Verbindungwärmetauscher und den Umgebungswärmetauscher umfassenden) Temperierkreis(e) durchströmt, zumindest zeitweise, gegebenenfalls immer zu Kühlungszwecken (d.h. für eine Kühlung des Temperierfluids) durch den Umgebungswärmetauscher geführt wird.

Als "Umgebungswärmetauscher" wird ein Wärmetauscher verstanden, der für einen Wärmeübergang zwischen einerseits dem Temperierfluid und andererseits Umgebungsluft vorgesehen ist. Dabei kann dieser Wärmeübergang sowohl einem Kühlen des Temperierfluids (aufgrund eines Wärmeübergangs auf die Umgebungsluft) als auch einem Erwärmen des Temperierfluids (aufgrund eines Wärmeübergangs von der Umgebungsluft) dienen.

Weiterhin umfasst das Thermomanagementsystem ein von dem Temperiersystem fluidisch getrenntes Transfersystem, das in zumindest einem (ersten) Transferkreislauf den ersten Verbindungswärmetauscher (beziehungsweise eine zweite Wärmetauschseite davon) und den zweiten Verbindungwärmetauscher (beziehungsweise eine zweite Wärmetauschseite davon) integriert.

Als "fluidische Trennung" des Temperiersystems und des Transfersystems voneinander wird dabei verstanden, dass im Betrieb dieser Systeme keine Vermischung von einerseits dem Temperierfluid und andererseits dem Transferfluid erfolgt. Demnach kann auch vorgesehen sein, dass sich das Temperierfluid von dem Transferfluid unterscheidet. Insbesondere kann vorgesehen sein, dass das Temperierfluid ein Fluid ist, das jederzeit im Betrieb des Temperiersystems flüssig ist. Dementsprechend kann/können die Temperierfluidfördervorrichtung(en) insbesondere auch als Pumpe(n) ausgestaltet sein. Das Transferfluid kann dagegen im Betrieb des Transfersystems sowohl im flüssigen als auch im gasförmigen Aggregatzustand vorliegen. Die Transferfluidfördervorrichtung(en) kann/können somit insbesondere als Pumpe und/oder als Verdichter ausgestaltet sein. In bestimmten Ausgestaltungsformen eines erfindungsgemäßen Kraftfahrzeugs kann aber auch vorgesehen sein, dasselbe Fluid für sowohl das Temperiersystem als auch das Transfersystem zu nutzen.

Das Thermomanagementsystem eines erfindungsgemäßen Kraftfahrzeugs ermöglicht eine vorteilhafte Temperierung der Funktionskomponenten sowie des Innenraums des Kraftfahrzeugs, was durch die vorgesehene Verschaltung zwischen einerseits dem Temperiersystem und andererseits dem Transfersystem über die zwei Verbindungswärmetauscher, die diese Systeme wärmetechnisch koppeln, ermöglicht ist. Der Transferkreis beziehungsweise das darin strömende Transferfluid kann dabei eine vorteilhafte Übertragung von Wärmeenergie zwischen den Verbindungswärmetauschern ermöglichen, über die wiederum eine möglichst optimale Temperierung der Funktionskomponenten und des Innenraums des Kraftfahrzeugs erfolgen kann.

Besonders vorteilhaft kann diese Übertragung von Wärmeenergie mittels des Transfersystems erfolgen, wenn die Transferfluidfördervorrichtung als Verdichter ausgestaltet ist und der (erste) Transferkreis zusätzlich eine Drossel integriert. Das Transfersystem weist dann folglich sämtliche Komponenten auf, die für eine Funktion als Kompressionswärmepumpe und/oder als Kompressionskältemaschine erforderlich sind. Dadurch besteht die Möglichkeit, mittels des Transfersystems besonders hohe Temperaturunterschiede zu generieren, was sich vorteilhaft hinsichtlich der Temperierung der Funktionskomponenten und des Innenraums des Kraftfahrzeugs auswirken kann.

Gemäß einer bevorzugten Ausgestaltungsform eines erfindungsgemäßen Kraftfahrzeugs kann vorgesehen sein, dass der Umgebungswärmetauscher in jeden Temperierkreis, der zumindest eine der Funktionskomponenten und den ersten Verbindungswärmetauscher umfasst, integriert oder integrierbar ist. Dies ermöglicht eine möglichst optimale bedarfsgerechte Temperierung dieser Funktionskomponenten. Sofern eine der Funktionskomponenten die Traktionsenergiequelle ist, kann aber auch vorgesehen sein, dass kein Temperierkreis vorgesehen ist, der die Traktionsenergiequelle, den ersten Verbindungswärmetauscher und den Umgebungswärmetauscher umfasst, wodurch sich eine relativ einfache Ausgestaltung des Thermomanagementsystems ergeben kann.

Weiterhin kann vorgesehen sein, dass der Umgebungswärmetauscher zudem in zumindest einen, gegebenenfalls in jeden den zweiten Verbindungswärmetauscher umfassenden Temperierkreis integriert oder integrierbar ist. Auch dies kann sich vorteilhaft hinsichtlich einer möglichst optimalen Temperierung der Funktionskomponenten und des Innenraums des Kraftfahrzeugs auswirken. Dabei kann vorgesehen sein, dass das den oder die entsprechenden Temperierkreise durchströmende Temperierfluid zumindest zeitweise, gegebenenfalls immer zu Erwärmungszwecken (d.h. für eine Erwärmung des Temperierfluids) durch den Umgebungswärmetauscher geführt wird.

Um eine möglichst optimale bedarfsgerechte Temperierung zu erzielen kann vorgesehen sein, dass die Traktionsenergiequelle und der Traktionsmotor in paralleler Anordnung in das Temperiersystem integriert sind, so dass diese unabhängig voneinander mittels des Temperierfluids durchströmbar sind.

Weiterhin kann vorgesehen sein, dass zum einen der Traktionsmotor und/oder zumindest eine Funktionskomponente einer Funktionskomponentengruppe, die folgende Funktionskomponenten umfasst: die Leistungselektronik, das Ladegerät und die Thermomanagementsystemsteuerung und zum anderen eine (Umgebungswärmetauscher-)Kombination, die aus dem Umgebungswärmetauscher und einem Umgebungswärmetauscherbypass besteht, in serieller Anordnung in das Temperiersystem integriert sind, so dass einerseits diese Funktionskomponente(n) und andererseits die Umgebungswärmetauscherkombination stets nur gemeinsam beziehungsweise gleichzeitig mittels des Temperierfluids durchströmbar sind. Dies kann zu einer relativ einfachen Ausgestaltung des Temperiersystems und damit des gesamten Thermomanagementsystems eines erfindungsgemäßen Kraftfahrzeugs führen. Als "Umgebungswärmetauscherbypass" wird dabei eine mittels des Verteilsystems hinsichtlich einer Durchströmung steuerbare Bypassleitung zur Umgehung des Umgebungswärmetauschers, insbesondere nur des Umgebungswärmetauschers, verstanden.

Gemäß einer bevorzugten Ausgestaltungsform eines erfindungsgemäßen Kraftfahrzeugs kann vorgesehen sein, dass dann, wenn eine der Funktionskomponenten die Traktionsenergiequelle ist, Temperiermittel in einem die Traktionsenergiequelle umfassenden und die Verbindungswärmetauscher sowie die andere(n) Funktionskomponente(n) ausschließenden Kurzschlusskreis förderbar ist. Dies ermöglicht eine zumindest zeitweise vorgesehene Selbsttemperierung der Traktionsenergiequelle, bei der mittels des Kurzschlusskreises beziehungsweise durch das darin mittels einer Temperierfluidfördervorrichtung geförderte Temperierfluid eine gleichmäßige Verteilung von lokal innerhalb der Traktionsenergiequelle anfallender Abwärme realisiert wird. Dies kann insbesondere bei einer aus einer Vielzahl von Zellen bestehenden Traktionsbatterie vorteilhaft sein. Eine solche thermische Entkopplung der Traktionsenergiequelle kann zudem eine bedarfsgerechte Temperierung der übrigen Funktionskomponenten und des Innenraums des Kraftfahrzeugs vereinfachen.

Gemäß einer bevorzugten Ausgestaltungsform eines erfindungsgemäßen Kraftfahrzeugs kann vorgesehen sein, dass das Transfersystem in dem ersten Transferkreislauf den ersten Verbindungswärmetauscher und den zweiten Verbindungswärmetauscher integriert und einen Luftwärmetauscher, durch den die Luft, die dem Innenraum des Kraftfahrzeugs zugeführt werden soll, zusätzlich (neben dem Heizungswärmetauscher) oder alternativ (anstelle des Heizungswärmetauschers) temperierbar ist, ausschließt. Weiterhin kann dann ein zweiter Transferkreislauf den ersten Verbindungswärmetauscher und den Luftwärmetauscher integrieren und den zweiten Verbindungswärmetauscher ausschließen, wobei mittels des Verteilsystems eine bedarfsweise Verteilung des Transferfluids auf den ersten Transferkreislauf und/oder den zweiten Transferkreislauf einstellbar ist. Auch diese Ausgestaltung ermöglicht eine besonders flexible Übertragung von Wärmeenergie mittels des Transfersystems und damit eine möglichst optimale bedarfsgerechte Temperierung der Funktionskomponenten und des Innenraums des Kraftfahrzeugs. Insbesondere kann damit eine vorteilhafte Temperierung des Innenraums des Kraftfahrzeugs realisiert werden, wobei der Luftwärmetauscher sowohl eine Erwärmung als auch eine Kühlung der dem Innenraum zuzuführenden Luft bewirken kann.

Eine vorteilhafte Temperierung des Innenraums des Kraftfahrzeugs kann auch bei einem solchen erfindungsgemäßen Kraftfahrzeug realisiert werden, das einen zweiten Heizungswärmetauscher umfasst, wobei der erste Heizungswärmetauscher und der zweite Heizungswärmetauscher insbesondere in paralleler Anordnung in das Temperiersystem integriert sein können.

Weiterhin kann das Thermomanagementsystem eines erfindungsgemäßen Kraftfahrzeugs einen Zuheizer, der in einen den Heizungswärmetauscher und den ersten Verbindungswärmetauscher umfassenden Temperierkreis integriert oder integrierbar ist, umfassen. Dieser Zuheizer kann einer bedarfsweise Erwärmung des Temperierfluids dienen, um unabhängig von dem Betriebszustand des Kraftfahrzeugs und von dabei in dem Thermomanagementsystem anfallender Abwärme eine ausreichende Erwärmung des Innenraums zu gewährleisten. Der Zuheizer kann dabei insbesondere elektrisch betreibbar sein, d.h. dieser wandelt elektrische Energie zu Heizzwecken in Wärmeenergie um. Möglich ist aber beispielsweise auch eine Ausgestaltung als Brenner.

Die Erfindung wird nachfolgend anhand von in den Zeichnungen dargestellten Ausgestaltungsbeispielen näher erläutert. In den Zeichnungen zeigt, jeweils in vereinfachter Darstellung:
- Fig. 1:: ein erfindungsgemäßes Kraftfahrzeug gemäß einer ersten Ausgestaltungsform;
- Fig. 2:: ein erfindungsgemäßes Kraftfahrzeug gemäß einer zweiten Ausgestaltungsform;
- Fig. 3:: ein erfindungsgemäßes Kraftfahrzeug gemäß einer dritten Ausgestaltungsform;
- Fig. 4:: ein erfindungsgemäßes Kraftfahrzeug gemäß einer vierten Ausgestaltungsform
- Fig. 5:: ein erfindungsgemäßes Kraftfahrzeug gemäß einer fünften Ausgestaltungsform;
- Fig. 6:: ein erfindungsgemäßes Kraftfahrzeug gemäß einer sechsten Ausgestaltungsform;
- Fig. 7:: ein erfindungsgemäßes Kraftfahrzeug gemäß einer siebten Ausgestaltungsform;
- Fig. 8:: ein erfindungsgemäßes Kraftfahrzeug gemäß einer achten Ausgestaltungsform;
- Fig. 9:: das Thermomanagementsystem des Kraftfahrzeugs gemäß der Fig. 8 in einem ersten Betriebszustand;
- Fig. 10:: das Thermomanagementsystem des Kraftfahrzeugs gemäß der Fig. 8 in einem zweiten Betriebszustand;
- Fig. 11:: das Thermomanagementsystem des Kraftfahrzeugs gemäß der Fig. 8 in einem dritten Betriebszustand;
- Fig. 12:: das Thermomanagementsystem des Kraftfahrzeugs gemäß der Fig. 8 in einem vierten Betriebszustand;
- Fig. 13:: das Thermomanagementsystem des Kraftfahrzeugs gemäß der Fig. 8 in einem fünften Betriebszustand;
- Fig. 14:: das Thermomanagementsystem des Kraftfahrzeugs gemäß der Fig. 8 in einem sechsten Betriebszustand.

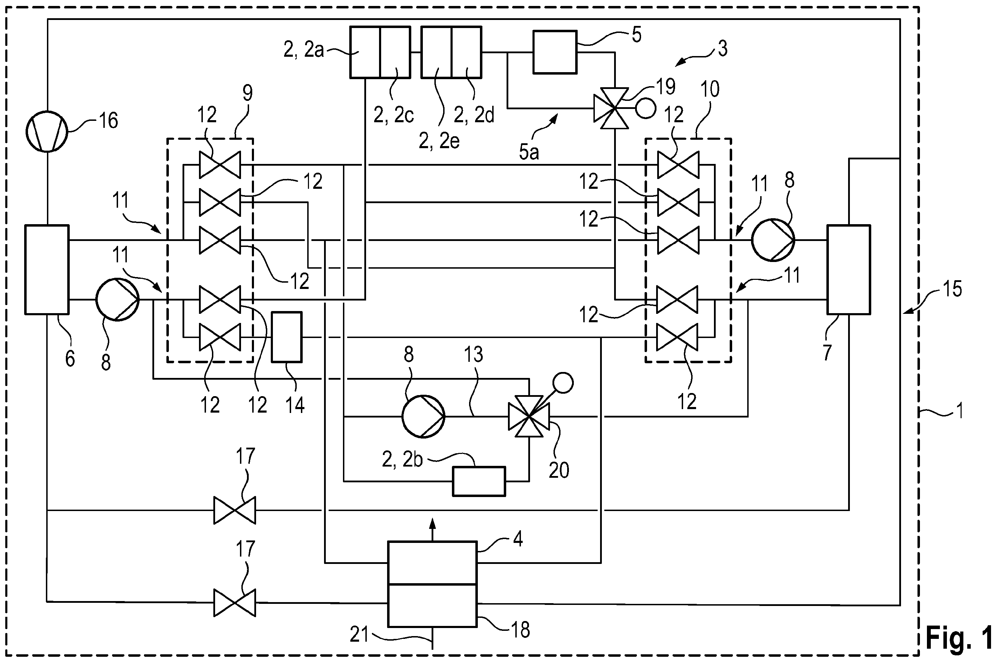

Die Fig. 1 zeigt eine erste Ausgestaltungsform eines erfindungsgemäßen Kraftfahrzeugs 1. Dieses ist in Form eines Elektrofahrzeugs ausgestaltet und umfasst als Funktionskomponenten 2 einen elektrischen Traktionsmotor 2a und eine Traktionsbatterie 2b, aus der der Traktionsmotor 2a mit elektrischer Energie versorgt werden kann, um das Kraftfahrzeug 1 anzutreiben. Weiterhin umfasst das Kraftfahrzeug 1 als Funktionskomponenten 2 eine Leistungselektronik 2c, die einen Pulswechselrichter zur Ansteuerung des Traktionsmotors 2a ist oder umfasst, eine Thermomanagementsystemsteuerung 2d sowie ein Ladegerät 2e, über das die Traktionsbatterie 2b zum Aufladen an eine externe Energiequelle (nicht dargestellt) anschließbar ist.

Sämtliche dieser Funktionskomponenten 2 des Kraftfahrzeugs 1 sind in ein Thermomanagementsystem des Kraftfahrzeugs 1 integriert, um deren bedarfsgerechte Temperierung zu gewährleisten. Eine solche Temperierung kann dabei zumindest zeitweise sowohl während des Fahrbetriebs des Kraftfahrzeugs 1 als auch während einer Nichtnutzung (d.h. kein Fahrbetrieb), insbesondere während eines Ladens der Traktionsbatterie 2b (Ladebetrieb), sinnvoll oder erforderlich sein.

Das Thermomanagementsystem umfasst einerseits ein Temperiersystem 3, innerhalb dessen die genannten Funktionskomponenten 2 sowie zusätzlich noch ein Heizungswärmetauscher 4, ein Umgebungswärmetauscher 5 mit einem Umgebungswärmetauscherbypass 5a, eine erste Wärmetauschseite eines ersten Verbindungswärmetauschers 6, eine erste Wärmetauschseite eines zweiten Verbindungswärmetauschers 7, mehrere Pumpen 8 (als Temperierfluidfördervorrichtungen), ein Zuheizer 14, eine erste Verteilvorrichtung 9 und eine zweite Verteilvorrichtung 10 sowie ein erstes Steuerventil 19 und ein zweites Steuerventil 20 integriert sind. Die Verteilvorrichtungen 9, 10 und die Steuerventile 19, 20 sind Bestandteile eines Verteilsystems des Thermomanagementsystems.

Die Verteilvorrichtungen 9, 10, die beispielsweise in Form von Drehschieber- oder Linearschieberventilen ausgestaltet sind, sind dabei jeweils einem der beiden Verbindungwärmetauscher 6, 7 zugeordnet.

Durch den Heizungswärmetauscher 4 ist Luft 21, die einem Innenraum des Kraftfahrzeugs 1 zugeführt werden soll, temperierbar.

Das erste Steuerventil 19 ist der (Umgebungswärmetauscher-)Kombination aus Umgebungswärmetauscher 5 und Umgebungswärmetauscherbypass 5a zugeordnet. Mittels dessen kann das Temperierfluid, das der Umgebungswärmetauscherkombination zugeführt wird, bedarfsweise auf den Umgebungswärmetauscher 5 und/oder den Umgebungswärmetauscherbypass 5a verteilt beziehungsweise aufgeteilt werden.

Der Traktionsmotor 2a, die Leistungselektronik 2c, das Ladegerät 2e, die Thermomanagementsystemsteuerung 2d sowie die Umgebungswärmetauscherkombination sind seriell in dem Temperiersystem 3 angeordnet.

Die Integration der genannten Komponenten in das Temperiersystem 3 bedeutet, dass diese miteinander fluidleitend über Fluidleitungen verbunden sind und bedarfsweise von Temperierfluid durchströmbar sind. Dazu wird das Temperierfluid bedarfsgerecht von den Pumpen 8 gefördert und mittels des Verteilsystems innerhalb des Temperiersystems 3 verteilt, wobei mehrere Temperierkreise ausgebildet werden können. Das Temperiersystem 3 ist dabei derart ausgestaltet, dass alle der genannten Funktionskomponenten 2, der Heizungswärmetauscher 4 sowie der Umgebungswärmetauscher 5 wechselweise mit sowohl dem ersten Verbindungswärmetauscher 6 als auch dem zweiten Verbindungswärmetauscher 7 zur Ausbildung jeweils eines (den ersten Verbindungswärmetauscher 6 oder den zweiten Verbindungswärmetauscher 7 umfassenden) Temperierkreises verbindbar sind.

Für diese Verschaltung des Temperiersystems 3 bildet jede der Verteilvorrichtungen 9, 10 zwei nicht-schaltbare Anschlüsse 11 zur Verbindung mit dem jeweils zugeordneten Verbindungswärmetauscher 6, 7 aus. Jeder dieser beiden Anschlüsse 11 ist mit jeweils einer (Anschluss-)Gruppe von schaltbaren Anschlüssen 12 fluidleitend verbunden. Jede der Anschlussgruppen umfasst mindestens zwei schaltbare Anschlüsse 12, von denen einer mit der seriell angeordneten Gruppe bestehend aus dem Traktionsmotor 2a, der Leistungselektronik 2c, der Thermomanagementsystemsteuerung 2d, dem Ladegerät 2e und der Umgebungswärmetauscherkombination und der andere mit dem Heizungswärmetauscher 4 fluidleitend verbunden ist. In die Fluidleitung, die einen der schaltbaren Anschlüsse 12 der ersten Verteilvorrichtungen 6 mit dem Heizungswärmetauscher 4 verbindet, ist zudem der Zuheizer14 integriert.

Weiterhin umfasst eine der Anschlussgruppen jeder der Verteilvorrichtungen 9, 10 einen dritten schaltbaren Anschluss 12, der mit der Traktionsbatterie 2b fluidleitend verbunden ist. Die Traktionsbatterie 2b ist zudem über jeweils einen nicht-schaltbaren Anschluss 11 mit jeder der Verteilvorrichtungen 9, 10 verbunden. Die Verschaltung der seriell angeordneten Gruppe bestehend aus dem Traktionsmotor 2a, der Leistungselektronik 2c, der Thermomanagementsystemsteuerung 2d, dem Ladegerät 2e und der Umgebungswärmetauscherkombination mit den Verteilvorrichtungen 9, 10 ist dabei derart gewählt, dass die beiden Anschlussseiten dieser Gruppe mit unterschiedlichen Anschlussgruppen der schaltbaren Anschlüsse 12 der Verteilvorrichtungen 9, 10 verbunden sind. Eine erste Anschlussseite der seriell angeordneten Gruppe bestehend aus den genannten Funktionskomponenten 2 und der Umgebungswärmetauscherkombination ist demnach mit der aus zwei schaltbaren Anschlüssen bestehenden Anschlussgruppe der ersten Verteilvorrichtung 9 und mit der aus drei schaltbaren Anschlüssen 12 bestehenden Anschlussgruppe der zweiten Verteilvorrichtung 10 verbunden. Die zweite Anschlussseite ist dagegen mit der aus drei schaltbaren Anschlüssen 12 bestehenden Anschlussgruppe der ersten Verteilvorrichtung 9 sowie mit der aus zwei schaltbaren Anschlüssen 12 bestehenden Anschlussgruppe der zweiten Verteilvorrichtung 10 verbunden. Diese Verschaltung ermöglicht eine Änderung der Richtung, mit der das Temperierfluid die Funktionskomponenten 2 und die Umgebungswärmetauscherkombination der seriell angeordneten Gruppe durchströmt.

Weiterhin ist noch eine Kurzschlussleitung 13 vorgesehen, die die beiden (sich im Bereich der Verteilvorrichtungen 9, 10 verzweigenden) Fluidleitungen, über die die Traktionsbatterie 2b mit den beiden Verteilvorrichtungen 9, 10 verbunden ist, miteinander verbindet, wobei dieser Kurzschlussleitung 13 das zweite Steuerventil 20 des Verteilsystems zugeordnet ist. Durch das zweite Steuerventil 20 kann bedarfsweise Temperierfluid mittels einer der Pumpen 8 in einem ansonsten ausschließlich die Traktionsbatterie 2b umfassenden Kurzschlusskreis gefördert werden.

Insgesamt sind drei Pumpen 8 vorgesehen, von denen jeweils eine in die Fluidleitungen, die die Verteilvorrichtungen 9, 10 mit den jeweils zugeordneten Verbindungswärmetauschern 6, 7 verbinden, und die dritte in die Kurzschlussleitung 13 integriert ist.

Das Thermomanagementsystem umfasst weiterhin ein Transfersystem 15, das zwei Transferkreise ausbildet. In beide Transferkreise beziehungsweise in einen integralen Abschnitt von diesen ist einerseits ein Verdichter 16 (als Transferfluidfördervorrichtung) und eine zweite Wärmetauschseite des ersten Verbindungswärmetauschers 6 integriert. In einen ersten Transferkreis ist dann zusätzlich noch eine erste, aktiv ansteuerbare beziehungsweise einstellbare Drossel 17 (z.B. in Form eines einstellbaren Expansionsventils oder als Kombination aus Expansionsventil und Schaltventil) und eine zweite Wärmetauschseite des zweiten Verbindungswärmetauschers 7 integriert. In den zweiten Transferkreis sind dagegen zusätzlich noch eine zweite, ebenfalls aktiv ansteuerbare Drossel 17 sowie ein Luftwärmetauscher 18 integriert, durch den Luft 21, die dem Innenraum des Kraftfahrzeugs 1 zugeführt werden soll, zusätzlich temperierbar ist.

Grundsätzlich kann mittels des in den Transferkreisen strömenden Transferfluids Wärmeenergie zwischen den verschiedenen Wärmetauschern 6, 7, 18 transferiert werden. Gleichzeitig ist das Transfersystem 15 derart ausgestaltet, dass dieses sowohl als Kompressionswärmepumpe als auch als Kompressionskältemaschine genutzt werden kann.

Bei einer Nutzung als Kompressionswärmepumpe erfolgt ein Wärmeübergang auf das Transferfluid in dem zweiten Verbindungswärmetauscher 7 und/oder in dem Luftwärmetauscher 18, wodurch das Transferfluid verdampft. Dieses noch relativ kalte, gasförmige Transferfluid wird dann mittels des Verdichters 16 verdichtet, wodurch (auch) dessen Temperatur ansteigt. Dadurch kann das Transferfluid in dem ersten Verbindungswärmetauscher 6 vorteilhaft zur Erwärmung von diesen ebenfalls durchströmendem Temperierfluid genutzt werden. Der entsprechende Wärmeübergang führt dazu, dass das Transferfluid kondensiert, wobei das Transferfluid anschließend noch mittels einer der Drosseln 17 auf einen niedrigeren Druck entspannt wird. Der Kreislauf des Kreisprozesses ist dann geschlossen.

Bei der Nutzung des Transfersystems 15 als Kompressionskältemaschine erfolgt eine Verdichtung des gasförmigen Transferfluids mittels des Verdichters 16. In dem ersten Verbindungswärmetauscher 6 wird das Transferfluid dann verflüssigt, was unter Abgabe von Wärmeenergie erfolgt. Anschließend durchströmt das flüssige Transferfluid zumindest eine der Drosseln 17, wodurch dieses entspannt wird. Bei der anschließenden Durchströmung des zweiten Verbindungswärmetauschers 7 und/oder des Luftwärmetauschers 18 verdampft das Transferfluid. Der Kreislauf des Kreisprozesses ist dann geschlossen. Der das Verdampfen bewirkende Wärmeübergang auf das Transferfluid in dem zweiten Verbindungswärmetauscher 7 und/oder in dem Luftwärmetauscher 18 kann vorteilhaft zur Kühlung von einem den entsprechenden Wärmetauscher 7, 18 ebenfalls durchströmenden Fluid (Temperierfluid oder Luft 21) genutzt werden.

Sowohl bei einer Nutzung des Transfersystems 15 als Kompressionswärmepumpe als auch als Kompressionskältemaschine dient der erste Verbindungswärmetauschers 6 als Kondensator und der zweite Verbindungswärmetauscher 7 und/oder der Luftwärmetauscher 18 als Verdampfer für das Transferfluid. Folglich ist es nicht erforderlich, für die unterschiedlichen Nutzungen des Transfersystems 15 die Strömungsrichtung des Transferfluids zu ändern.

Dadurch wird eine relativ einfache und demnach vorteilhafte Ausgestaltung des Transfersystems 15 ermöglicht.

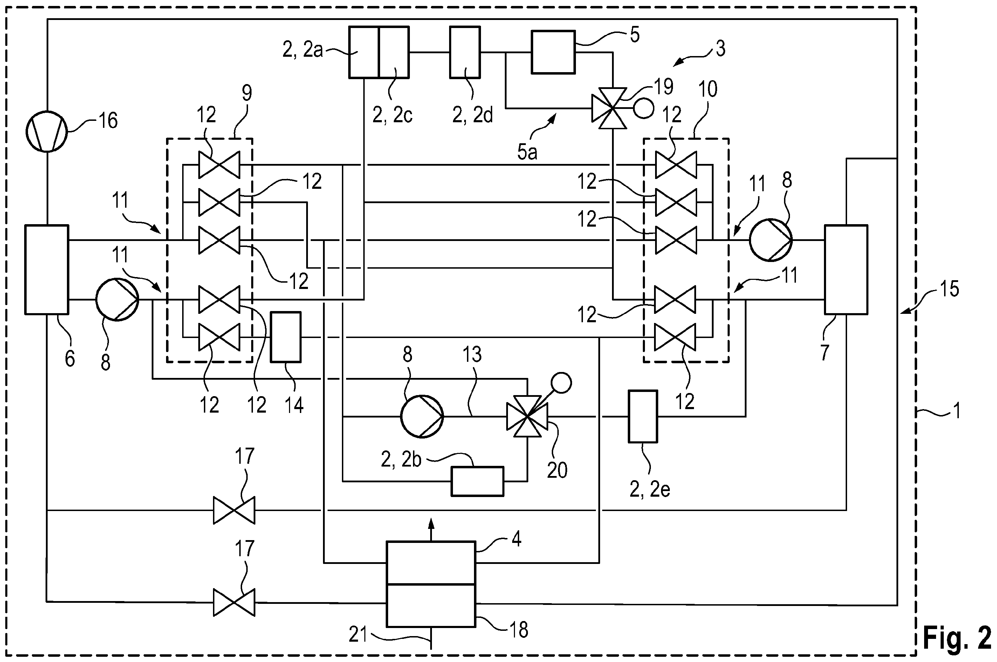

Die Fig. 2 zeigt ein erfindungsgemäßes Kraftfahrzeug 1 gemäß einer zweiten Ausgestaltungsform, das sich von demjenigen gemäß der Fig. 1 nur dahingehend unterscheidet, dass das Ladegerät 2e in den Abschnitt der Fluidleitung, der die Traktionsbatterie 2b beziehungsweise das zweite Steuerventil 20 mit dem entsprechenden nicht-schaltbaren Anschluss 11 der zweiten Verteilvorrichtung 10 verbindet, integriert ist.

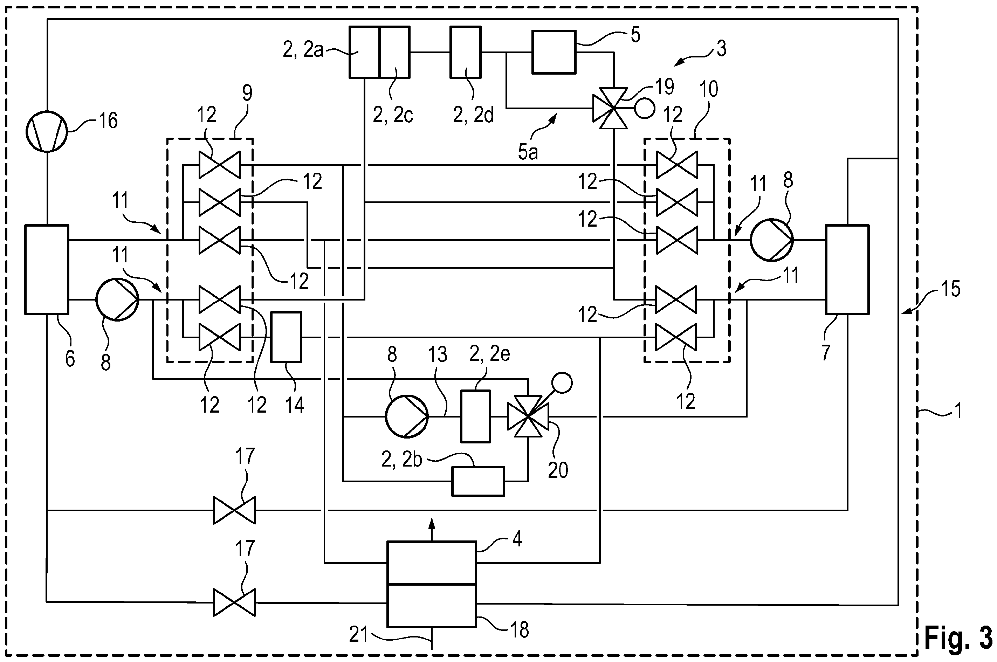

Bei dem erfindungsgemäßen Kraftfahrzeug 1 gemäß der Fig. 3 ist das Ladegerät 2e dagegen in die Kurzschlussleitung 13 integriert. Ansonsten entspricht dieses Kraftfahrzeug 1 denjenigen der Fig. 1 und 2.

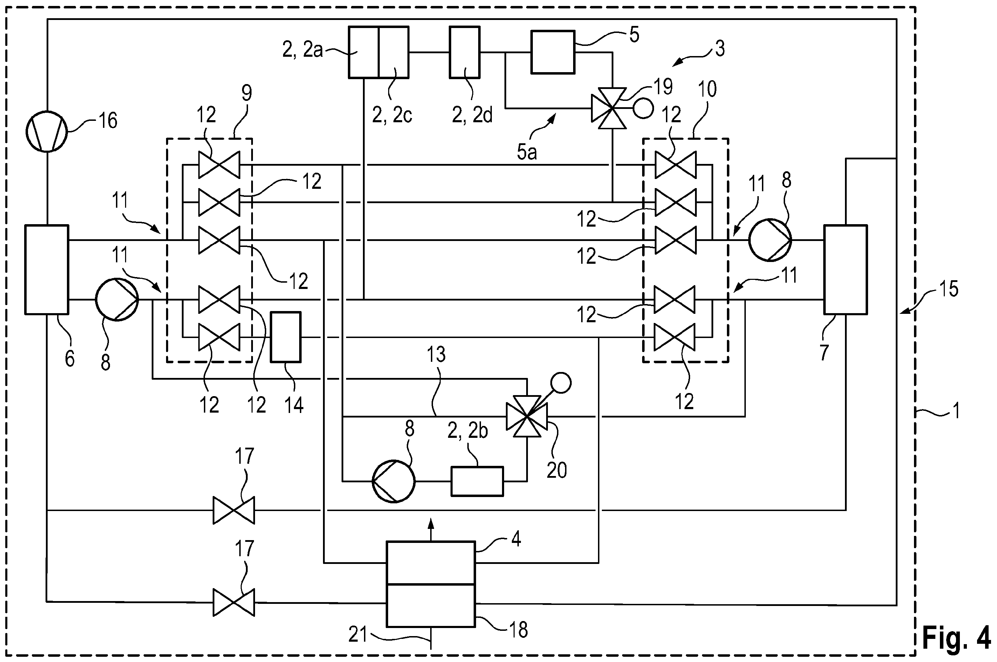

Die Fig. 4 zeigt ein erfindungsgemäßes Kraftfahrzeug 1 gemäß einer vierten Ausgestaltungsform, das sich von demjenigen gemäß den Fig. 1 bis 3 dahingehend unterscheidet, dass kein Ladegerät 2e in das Thermomanagementsystem integriert ist. Dies kann der Fall sein, wenn ein vorhandenes Ladegerät 2e auf andere Weise temperiert wird oder es keiner aktiven Temperierung des Ladegeräts 2e bedarf. Weiterhin ist bei dem Kraftfahrzeug 1 gemäß der Fig. 4 die bei den Kraftfahrzeugen 1 gemäß den Fig. 1 bis 3 in die Kurzschlussleitung 13 integrierte Kühlmittelpumpe 8 unmittelbar stromab der Traktionsbatterie 2b in diejenige Fluidleitung, die die Traktionsbatterie 2b mit den schaltbaren Anschlüssen 12 der Verteilvorrichtungen 6, 7 verbindet, integriert. Ein weiterer Unterschied des in der Fig. 4 dargestellten Kraftfahrzeugs 1 gegenüber denjenigen der Fig. 1 bis 3 liegt darin, dass die beiden Anschlussseiten der seriell angeordneten Gruppe bestehend aus dem Traktionsmotor 2a, der Leistungselektronik 2c, der Thermomanagementsystemsteuerung 2d und der Umgebungswärmetauscherkombination jeweils mit derselben Anschlussgruppe (d.h. umfassend entweder drei oder zwei schaltbare Anschlüsse 12) der Verteilvorrichtungen 9, 10 verbunden sind.

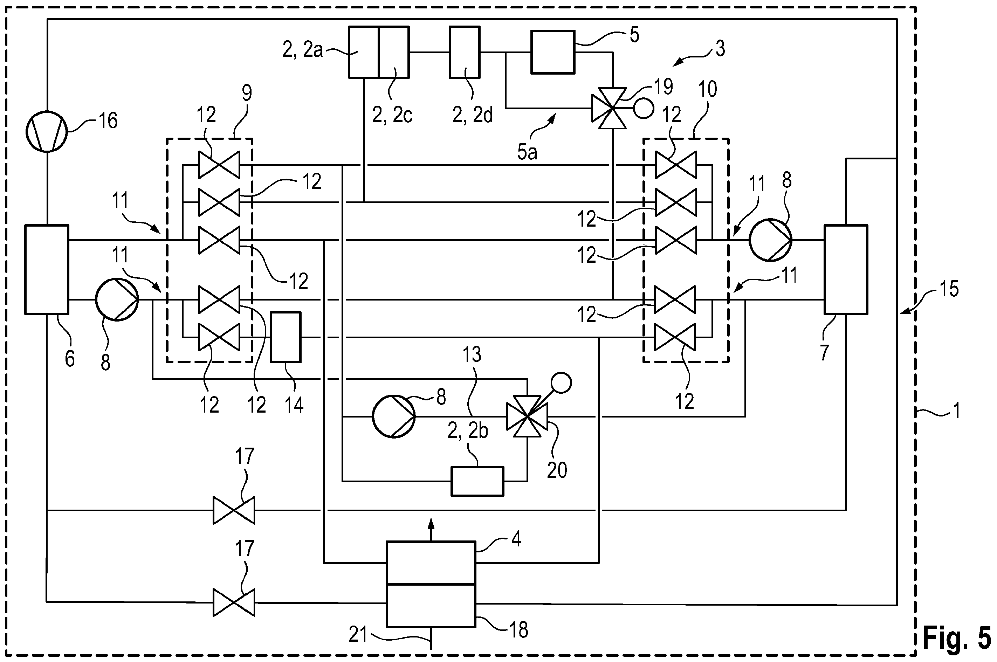

Die Fig. 5 zeigt ein erfindungsgemäßes Kraftfahrzeug 1 gemäß einer fünften Ausgestaltungsform, das sich von demjenigen gemäß der Fig. 4 nur dahingehend unterscheidet, dass (wie bei den Kraftfahrzeugen 1 gemäß den Fig. 1 bis 3) für eine der Pumpen 8 eine Anordnung in der Kurschlussleitung 13 anstelle von der Anordnung unmittelbar stromab der Traktionsbatterie 2b vorgesehen ist.

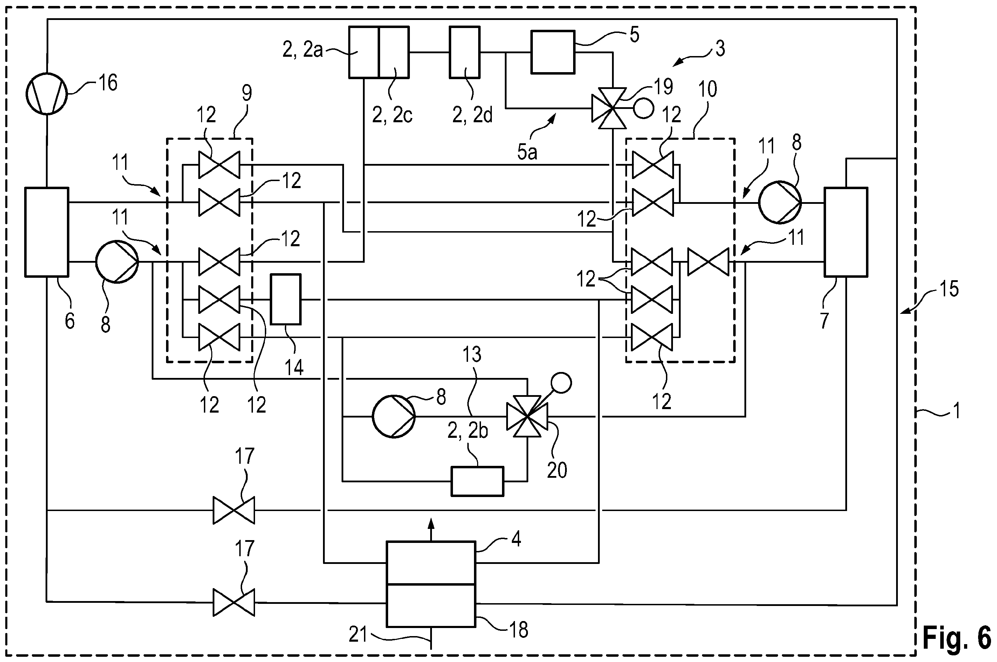

Die Fig. 6 zeigt ein erfindungsgemäßes Kraftfahrzeug 1 gemäß einer sechsten Ausgestaltungsform, das sich von denjenigen gemäß den Fig. 1 bis 3 wiederum dahingehend unterscheidet, dass kein Ladegerät 2e in das Thermomanagementsystem integriert ist.

Weiterhin ist die Anordnung der verschiedenen Anschlussgruppen (d.h. mit entweder zwei oder drei schaltbaren Anschlüssen 12) jeder der beiden Verteilvorrichtungen 6, 7 geändert, wodurch eine entsprechend geänderte Zuordnung dieser unterschiedlichen Anschlussgruppen zu den Fluidleitungen, die die Verteilvorrichtungen 9, 10 mit den jeweils zugeordneten Verbindungswärmetauschers 6, 7 realisiert ist. Von diesen Fluidleitungen ist jeweils eine eine Fluidzuleitung und die andere eine Fluidableitung, was wird durch die Förderrichtung der jeweils zugeordneten Pumpe 8 (in den Zeichnungen anhand der Pfeile in den Pumpensymbolen gekennzeichnet) definiert ist.

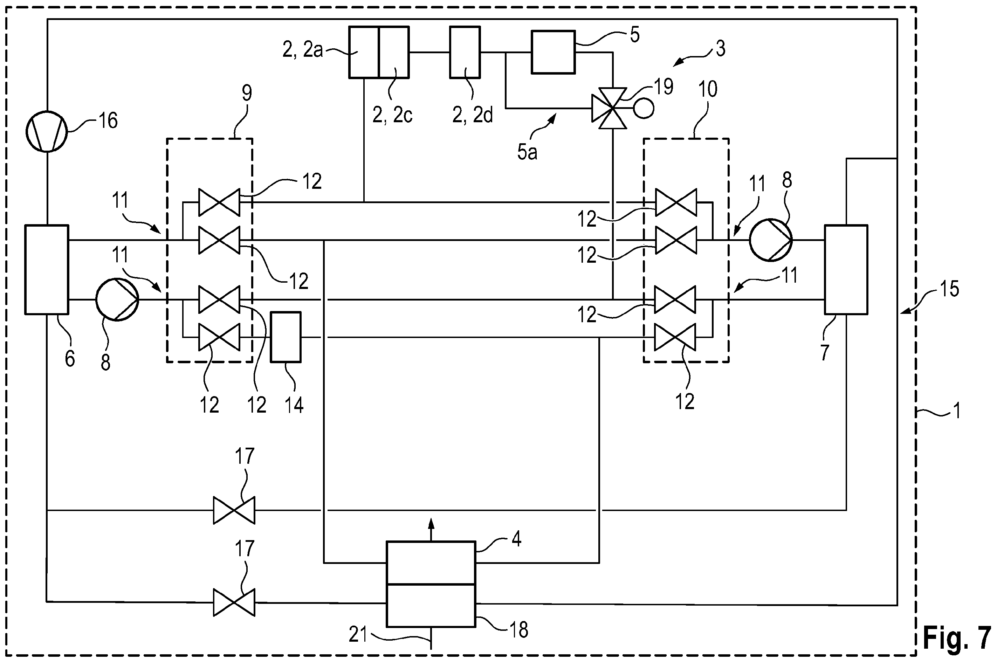

Das in der Fig. 7 dargestellte Thermomanagementsystem eines erfindungsgemäßen Kraftfahrzeugs 1 unterscheidet sich von denjenigen gemäß den Fig. 4 und 5 lediglich darin, dass keine Traktionsbatterie 2b in das Thermomanagementsystem integriert ist. Dies kann der Fall sein, wenn eine solche Traktionsbatterie 2b auf andere Weise temperiert wird oder es keiner aktiven Temperierung der Traktionsbatterie 2b bedarf oder wenn eine andere Traktionsenergiequelle, beispielsweise einer Brennstoffzelle, vorgesehen ist, für die das gilt. Durch die fehlende Integration einer Traktionsbatterie 2b kann die Anzahl der für das Fördern des Temperierfluids erforderlichen Pumpen 8 auf zwei reduziert sein. Ebenso können die Verteilvorrichtungen 6, 7 vereinfacht ausgestaltet sein, da lediglich jeweils zwei Anschlussgruppen mit zwei schaltbaren Anschlüssen 12 vorgesehen sein müssen. Auch das zweite Steuerventil 20 entfällt bei dieser Ausgestaltungsform.

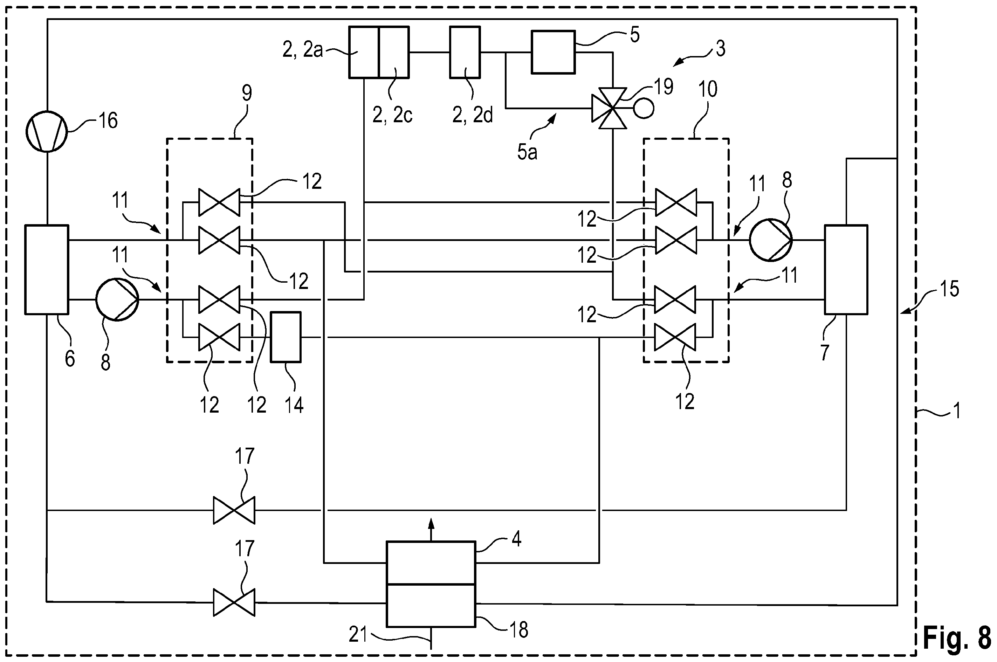

Das Thermomanagementsystem gemäß der Fig. 8 entspricht im Wesentlichen demjenigen gemäß der Fig. 7. Ein Unterschied ist jedoch die unterschiedliche Verschaltung der seriell angeordneten Gruppe bestehend aus dem Traktionsmotor 2a, der Leistungselektronik 2c, der Thermomanagementsystemsteuerung 2d und der Umgebungswärmetauscherkombination mit den Verteilvorrichtungen 9, 10. Diese ist bei der Ausgestaltungsform gemäß der Fig. 8 (so wie bei den Ausgestaltungsformen gemäß den Fig. 1 bis 3 und 6) derart gewählt, dass die beiden Anschlussseiten dieser Gruppe mit unterschiedlichen Anschlussgruppen der Verteilvorrichtungen 6, 7 verbunden sind.

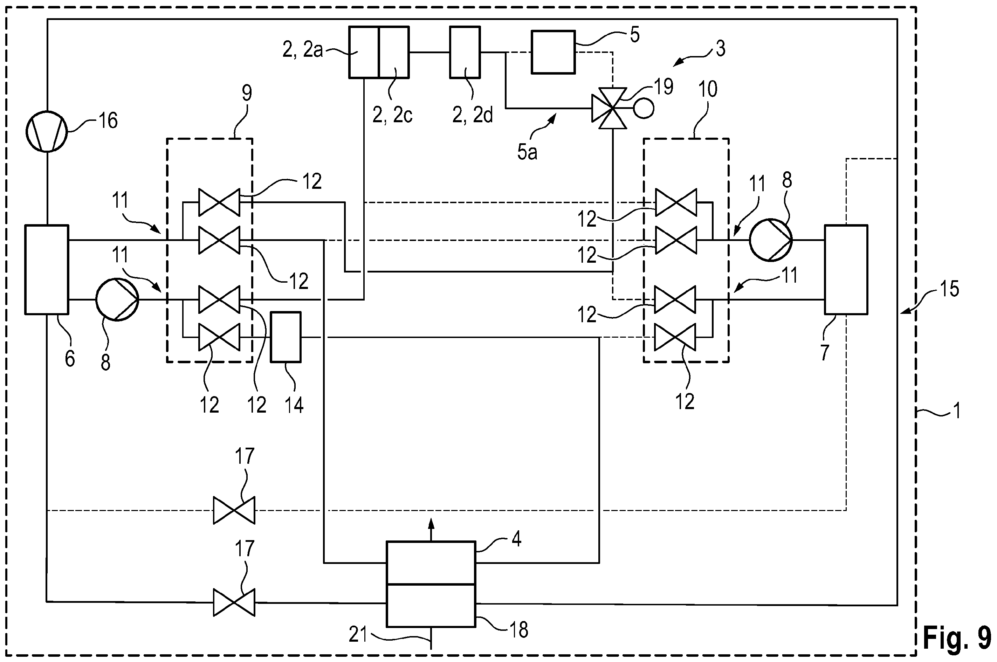

Die Fig. 9 zeigt einen ersten Betriebszustand des Thermomanagementsystems gemäß der Fig. 8, der bei einem Fahrbetrieb des Kraftfahrzeugs 1 und bei einer unmittelbar stromab des Umgebungswärmetauschers 5 gemessenen Temperatur des Temperierfluids, die unterhalb einer Grenztemperatur ("Temperierfluidgrenztemperatur"; z.B. 50°C) liegt, vorgesehen sein kann.

Durch eine entsprechende Ansteuerung der schaltbaren Anschlüsse 12 der ersten Verteilvorrichtung 9 sind zwei Temperierkreise ausgebildet, die jeweils den ersten Verbindungswärmetauscher 6 und zusätzlich entweder die seriell angeordnete Gruppe bestehend aus dem Traktionsmotor 2a, der Leistungselektronik 2c, der Thermomanagementsystemsteuerung 2d und der Umgebungswärmetauscherkombination oder den Umgebungswärmetauscher 4 integrieren. Dabei wird das Temperiermittel ausschließlich über den Umgebungswärmetauscherbypass 5a geführt.

Das Transfersystem 15 kann während dieses ersten Betriebszustands des Thermomanagementsystems als Kompressionskältemaschine genutzt werden, wobei die Luft 21, die dem Innenraum des Kraftfahrzeugs 1 zugeführt werden soll, zunächst in dem Luftwärmetauscher 18 (in der Funktion als Verdampfer der Kompressionskältemaschine) gekühlt wird. Die dabei in dem ersten Verbindungswärmetauschers 6 (in der Funktion als Kondensator der Kompressionskältemaschine) anfallende Wärmeenergie - ebenso wie Abwärme der vorhandenen Funktionskomponenten 2 - kann mittels des Heizungswärmetauschers 4 an die Luft 21 abgegeben werden. Diese Luft 21 wird folglich zunächst mittels des Luftwärmetauschers 18 gekühlt und anschließend mittels des Heizungswärmetauschers 4 erwärmt, was mit dem Ziel erfolgt, diese Luft 21 zu trocknen, indem Wasser aus der zunächst gekühlten Luft 21 auskondensiert, bevor diese wieder erwärmt wird (sogenannte "Reheat"-Funktionalität).

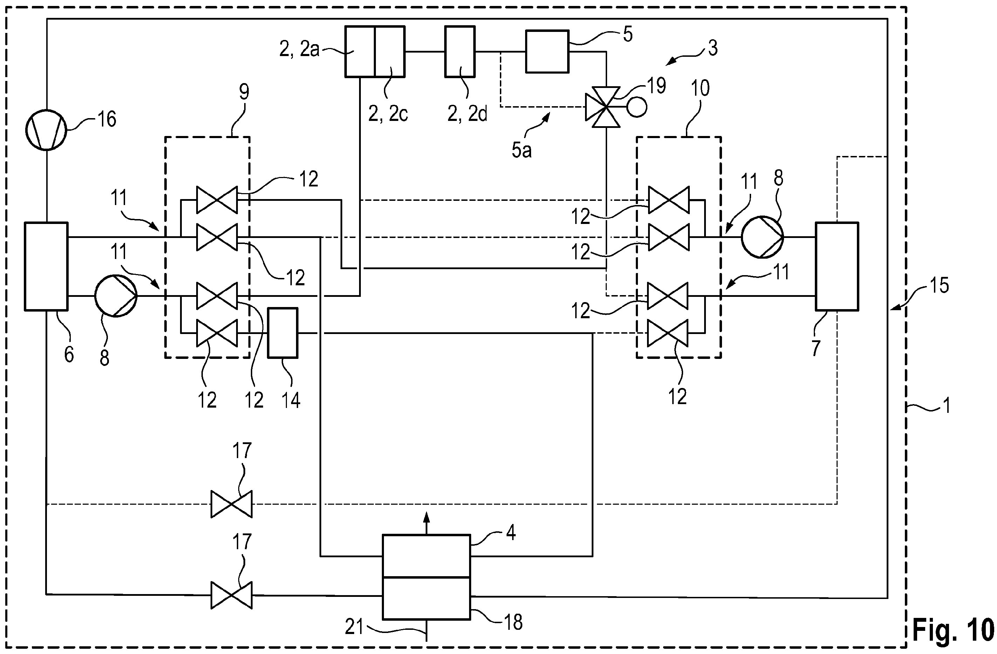

Der in der Fig. 10 dargestellte, zweite Betriebszustand unterscheidet sich von demjenigen gemäß der Fig. 9 lediglich darin, dass das Temperiermittel in dem Temperierkreis, der die seriell angeordnete Gruppe umfasst, ausschließlich über den Umgebungswärmetauscher 5 und nicht über den Umgebungswärmetauscherbypass 5a geführt wird. Dies kann vorgesehen sein, wenn die Temperatur des Temperierfluids oberhalb der Temperierfluidgrenztemperatur liegt. Dadurch kann überschüssige Wärmeenergie, die das diesen Temperierkreis durchströmende Temperiermittel aufweist und die für die Erwärmung der Luft 21 mittels des Heizungswärmetauschers 4 nicht benötigt wird, über den Umgebungswärmetauscher 5 an Umgebungsluft abgegeben werden.

Eine Steuerung der über den Umgebungswärmetauscher 5 abgegebenen Wärmeenergie kann durch ein gezieltes Umschalten zwischen dem ersten Betriebszustand und dem zweiten Betriebszustand (durch ein entsprechendes Umschalten des ersten Steuerventils 19) realisiert werden. Ergänzend oder alternativ dazu können hierfür auch eine beliebige Anzahl an Zwischenbetriebszuständen vorgesehen sein, die grundsätzlich den ersten und zweiten Betriebszuständen gemäß den Fig. 9 und 10 entsprechen, bei denen jedoch das an der Umgebungswärmetauscherkombination ankommende Temperiermittel mittels entsprechender Einstellung des ersten Steuerventils 19 in unterschiedlichen Verhältnissen über sowohl den Umgebungswärmetauscher 5 als auch den Umgebungswärmetauscherbypass 5a geführt wird.

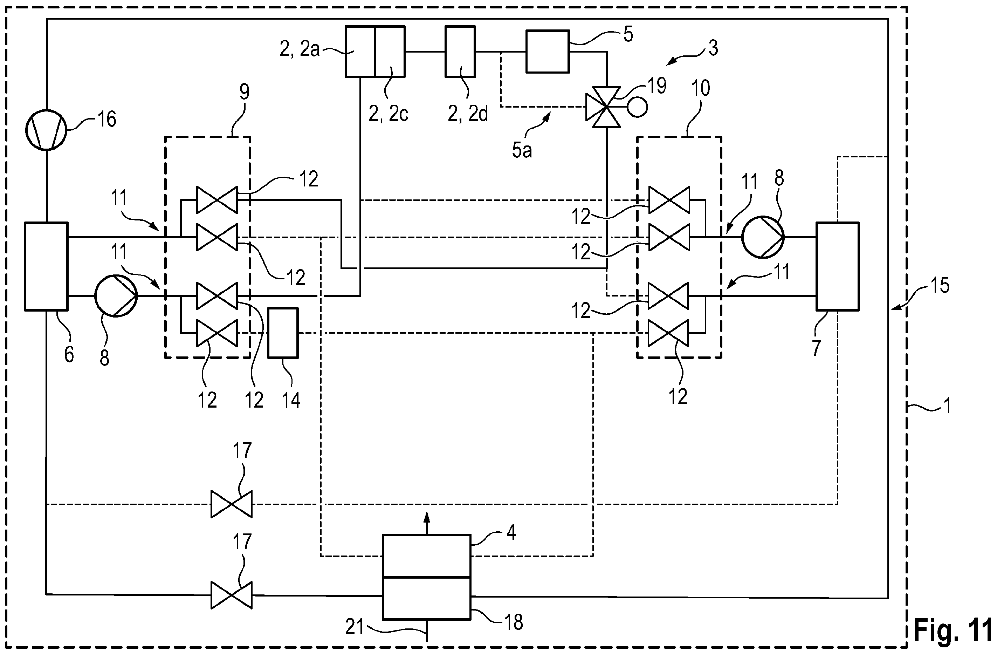

Die Fig. 11 zeigt einen dritten Betriebszustand des Thermomanagementsystems, der sich von den ersten und zweiten Betriebszuständen gemäß den Fig. 9 und 10 dahingehend unterscheidet, dass der den Heizungswärmetauscher 4 umfassende Temperierkreis nicht vorhanden beziehungsweise nicht mit Temperiermittel durchströmt wird. Dadurch wird die Luft 21 lediglich mittels des Transfersystems 15 gekühlt, wobei die dabei in dem ersten Verbindungswärmetauschers 6 (in der Funktion als Kondensator der Kompressionskältemaschine) anfallende Abwärme mittels des verbliebenen Temperierkreises und des darin eingebundenen Umgebungswärmetauschers 5 an Umgebungsluft abgeführt wird. Dieser dritte Betriebszustand kann sowohl bei einem Fahrbetrieb des Kraftfahrzeugs 1 als auch bei einem dauerhaften Stillstand beziehungsweise bei einer Nichtnutzung des Kraftfahrzeugs 1, insbesondere jeweils bei einer oberhalb einer/der Grenztemperatur liegenden Umgebungstemperatur, vorgesehen sein. Bei der Nichtnutzung des Kraftfahrzeugs 1 würde dann eine sogenannte "Standklimatisierung" realisiert werden.

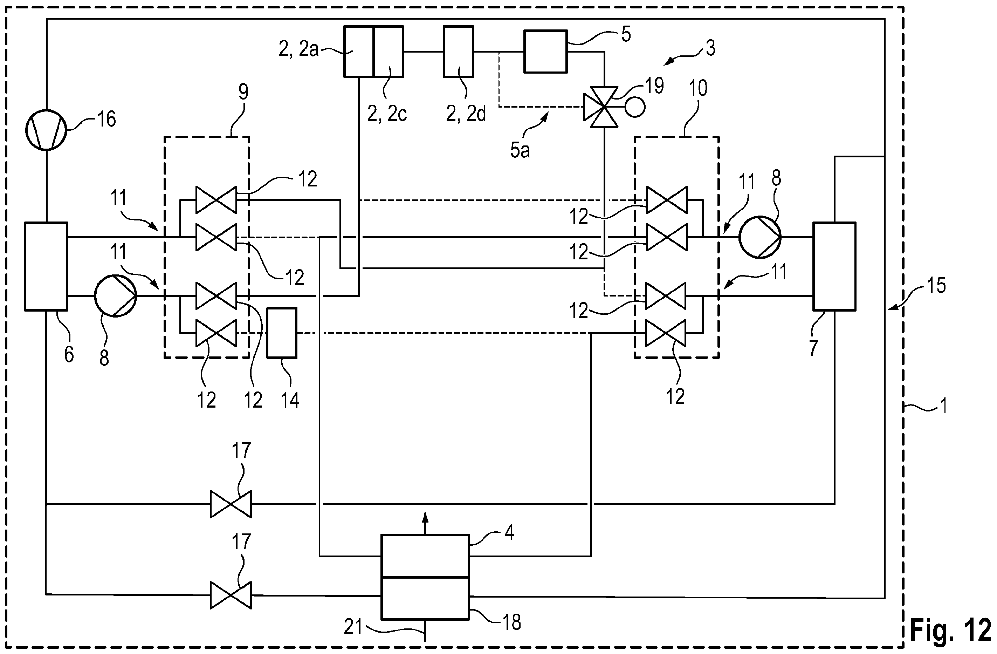

Die Fig. 12 zeigt einen vierten Betriebszustand des Thermomanagementsystems, der sich von dem dritten Betriebszustand gemäß der Fig. 11 dahingehend unterscheidet, dass durch eine entsprechende Ansteuerung der schaltbaren Anschlüsse 12 der zweiten Verteilvorrichtung 10 ein zusätzlicher Temperierkreis freigegeben ist beziehungsweise durchströmt wird, der den zweiten Verbindungswärmetauscher 7 sowie den Heizungswärmetauscher 4 integriert. Weiterhin wird Transfermittel durch eine entsprechende Ansteuerung der Drosseln 17 über die beiden Transferkreise geführt. In diesem vierten Betriebszustand des Thermomanagementsystem wird die Luft 21 nicht nur mittels des Luftwärmetauschers 18 (in einer Funktion als Verdampfer des als Kompressionskältemaschine genutzten Transfersystems 15) sondern auch mittels des Heizungswärmetauschers 4 gekühlt, wozu das den Heizungswärmetauscher 4 durchströmende Kühlmittel mittels des zweiten Verbindungswärmetauschers 7 (ebenfalls in einer Funktion als Verdampfer des als Kompressionskältemaschine genutzten Transfersystems 15) entsprechend gekühlt wird.

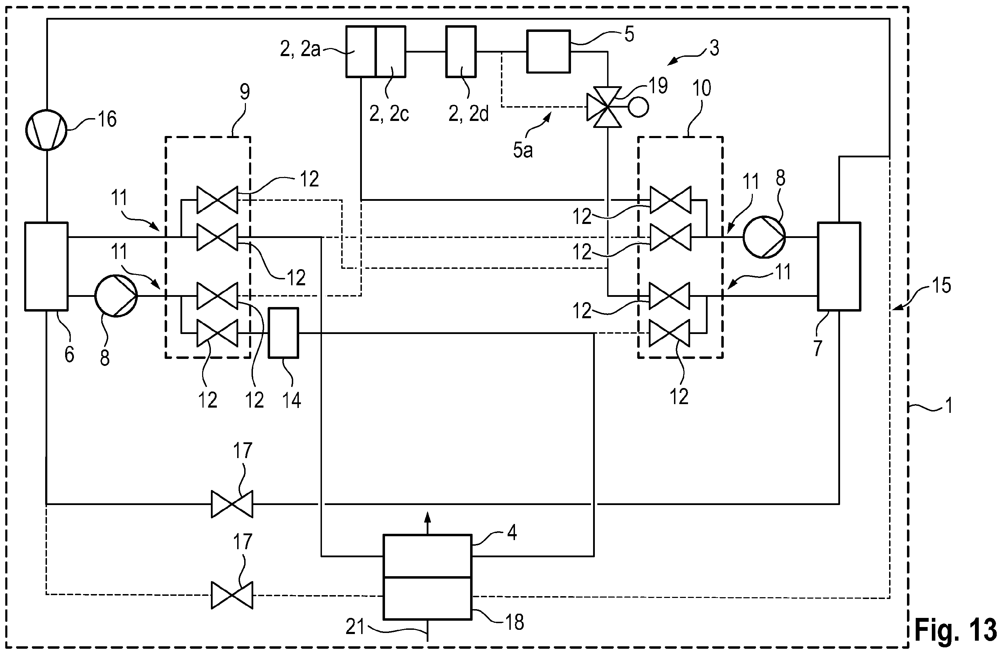

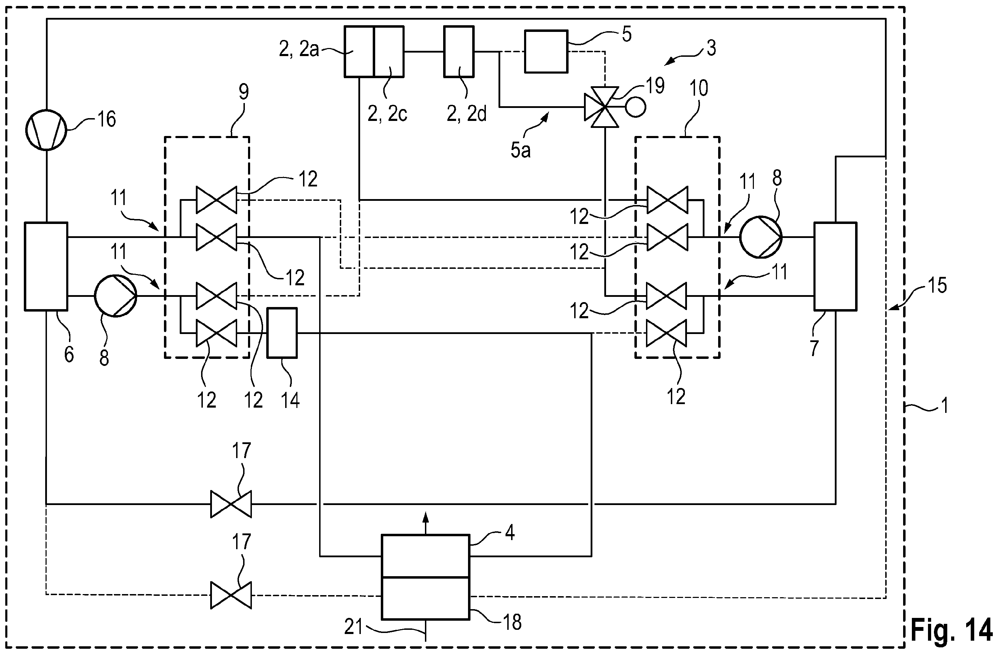

Die Fig. 13 und 14 zeigen einen fünften und sechsten Betriebszustand des Thermomanagementsystems, die ebenfalls sowohl bei einem Fahrbetrieb des Kraftfahrzeugs 1 als auch bei einem Nichtbetrieb vorgesehen sein können. Durch eine entsprechende Ansteuerung der schaltbaren Anschlüsse 12 der ersten Verteilvorrichtung 9 und der zweiten Verteilvorrichtung 10 sind zwei Temperierkreise freigegeben, von denen einer, neben der ersten Verteilvorrichtung 9, den ersten Verbindungswärmetauscher 6, den Zuheizer 14 und den Heizungswärmetauscher 4 und der andere, neben der zweiten Verteilvorrichtung 10, den zweiten Verbindungswärmetauscher 7 und die seriell angeordnete Gruppe bestehend aus dem Traktionsmotor 2a, der Leistungselektronik 2c, der Thermomanagementsystemsteuerung 2d und der Umgebungswärmetauscherkombination integriert.

Das Transfersystem 15 kann sowohl in dem fünften Betriebszustand als auch in dem sechsten Betriebszustand des Thermomanagementsystems als Kompressionswärmepumpe genutzt werden. Dabei wird in dem zweiten Verbindungswärmetauscher 7 Abwärme des Traktionsmotors 2a, der Leistungselektronik 2c und der Thermomanagementsystemsteuerung 2d (als zu kühlende Funktionskomponenten 2) auf das Transferfluid übertragen. Diese Wärmeenergie wird in dem ersten Verbindungswärmetauscher 6 zur Erwärmung von Temperierfluid genutzt, das den diesen einbindenden Temperierkreis durchströmt. Dieses relativ warme Temperierfluid wird dann in dem Heizungswärmetauscher 4 für ein Erwärmen der dem Innenraum des Kraftfahrzeugs 1 zuzuführenden Luft 21 genutzt. In Abhängigkeit von der für die Erwärmung der Luft 21 benötigten Wärmeenergiemenge kann der Umgebungswärmetauscher 5 mittels des ersten Steuerventils 19 in den entsprechenden Temperierkreis eingebunden (vgl. Fig. 13) oder ausgeschlossen (vgl. Fig. 14) sein. Ein Einbinden kann dann erfolgen, wenn mehr Wärmeenergie durch die Kühlung der genannten Funktionskomponenten 2 zur Verfügung steht, als in dem Heizungswärmetauscher 4 für ein Erwärmen der Luft 21 benötigt wird. Fällt dagegen weniger Wärmeenergie durch die Kühlung der Funktionskomponenten 2 ab als für das Erwärmen der Luft 21 erforderlich ist, kann die noch benötigte Differenz dazu mittels des Zuheizers 14 erzeugt werden. Ein Einbinden des Umgebungswärmetauschers 5 kann alternativ oder ergänzend auch dann erfolgen, wenn die Temperatur des Temperierfluids unmittelbar stromab des zweiten Verbindungswärmetauschers 7 kleiner als die Umgebungstemperatur ist. Dadurch kann auch Wärmeenergie für die Temperierung der Luft 21 genutzt werden, die über den Umgebungswärmetauscher 5 der Umgebungsluft entzogen wurde.

### BEZUGSZEICHENLISTE

- 1: Kraftfahrzeug
- 2: Funktionskomponente
- 2a: Traktionsmotor
- 2b: Traktionsbatterie (Traktionsenergiequelle)
- 2c: Leistungselektronik
- 2d: Thermomanagementsystemsteuerung
- 2e: Ladegerät
- 3: Temperiersystem
- 4: Heizungswärmetauscher
- 5: Umgebungswärmetauscher
- 5a: Umgebungswärmetauscherbypass
- 6: erster Verbindungswärmetauscher
- 7: zweiter Verbindungswärmetauscher
- 8: Pumpe (Temperierfluidfördervorrichtung)
- 9: erste Verteilvorrichtung
- 10: zweite Verteilvorrichtung
- 11: nicht-schaltbarer Anschluss einer Verteilvorrichtung
- 12: schaltbarer Anschluss einer Verteilvorrichtung
- 13: Kurzschlussleitung
- 14: Zuheizer
- 15: Transfersystem
- 16: Verdichter (Transferfluidfördervorrichtung)
- 17: Drossel
- 18: Luftwärmetauscher
- 19: erstes Steuerventil
- 20: zweites Steuerventil
- 21: Luft

## Patentansprüche

1. Kraftfahrzeug (1) mit einem Thermomanagementsystem, das
- ein Temperiersystem (3), in das
• eine Mehrzahl von zu temperierenden Funktionskomponenten (2),
• ein Umgebungswärmetauscher (5) und
• ein Heizungswärmetauscher (4), durch den Luft (21), die einem Innenraum des Kraftfahrzeugs (1) zugeführt werden soll, temperierbar ist,
integriert sind,
wobei jede der Funktionskomponenten (2) und der Heizungswärmetauscher (4) mittels eines Verteilsystems wechselweise mit sowohl einem ersten Verbindungwärmetauscher (6) als auch einem zweiten Verbindungwärmetauscher (7) zur Ausbildung von Temperierkreisen, in denen jeweils ein Temperierfluid in einem Kreislauf mittels mindestens einer Temperierfluidfördervorrichtung (8) förderbar ist, verbindbar sind, wobei das Verteilsystem eine erste Verteilvorrichtung (9), die ausschließlich mit dem ersten Verbindungswärmetauscher (6) verbunden oder verbindbar ist, und eine zweite Verteilvorrichtung (10), die ausschließlich mit dem zweiten Verbindungswärmetauscher (7) verbunden oder verbindbar ist, umfasst und wobei der Umgebungswärmetauscher (5) zumindest in einen den ersten Verbindungwärmetauscher (6) umfassenden Temperierkreis integriert oder integrierbar ist,
und
- ein von dem Temperiersystem (3) fluidisch getrenntes Transfersystem (15), das in einem (ersten) Transferkreis eine Transferfluidfördervorrichtung (16) zur Förderung von Transferfluid, den ersten Verbindungwärmetauscher (6) und den zweiten Verbindungwärmetauscher (7) integriert,
umfasst.

2. Kraftfahrzeug (1) gemäß Anspruch 1, **dadurch gekennzeichnet, dass** die Transferfluidfördervorrichtung (16) als Verdichter ausgestaltet ist und der (erste) Transferkreis zusätzlich eine Drossel (17) integriert.

3. Kraftfahrzeug (1) gemäß einem der vorhergehenden Ansprüche, **dadurch gekennzeichnet, dass** der Umgebungswärmetauscher (5) in zumindest einen den zweiten Verbindungswärmetauscher (7) umfassenden Temperierkreis integriert oder integrierbar ist.

4. Kraftfahrzeug (1) gemäß einem der vorhergehenden Ansprüche, **dadurch gekennzeichnet, dass** die Funktionskomponenten (2) zumindest zwei aus der Gruppe umfassend einen elektrischen Traktionsmotor (2a), eine Leistungselektronik (2c), eine Traktionsenergiequelle (2b), ein Ladegerät (2e) und eine Thermomanagementsystemsteuerung (2d) sind.

5. Kraftfahrzeug (1) gemäß Anspruch 4, **dadurch gekennzeichnet, dass** die Traktionsenergiequelle (2b) und der Traktionsmotor (2a) in paralleler Anordnung in das Temperiersystem integriert sind.

6. Kraftfahrzeug (1) gemäß Anspruch 4 oder 5, **dadurch gekennzeichnet, dass** zum einen der Traktionsmotor (2a) und/oder zumindest eine Funktionskomponente (2) der Gruppe umfassend die Leistungselektronik (2c), das Ladegerät (2e) und die Thermomanagementsystemsteuerung (2d) und zum anderen eine Kombination aus dem Umgebungswärmetauscher (5) und einem Umgebungswärmetauscherbypass (5a) in serieller Anordnung in das Temperiersystem (3) integriert sind.

7. Kraftfahrzeug (1) gemäß einem der vorhergehenden Ansprüche, **dadurch gekennzeichnet, dass** eine der Funktionskomponenten (2) eine/die Traktionsenergiequelle (2b) ist, wobei Temperiermittel in einem die Traktionsenergiequelle (2b) umfassenden und die Verbindungswärmetauscher (6, 7) sowie den oder die andere(n) Funktionskomponente(n) (2) ausschließenden Kurzschlusskreis förderbar ist.

8. Kraftfahrzeug (1) gemäß einem der vorhergehenden Ansprüche, **dadurch gekennzeichnet, dass** die erste Verteilvorrichtung (9) und/oder die zweite Verteilvorrichtung (10) als Drehschieberventil und/oder Linearschieberventil ausgestaltet ist/sind.

9. Kraftfahrzeug (1) gemäß einem der vorhergehenden Ansprüche, **dadurch gekennzeichnet, dass** das Transfersystem (15)
- in dem ersten Transferkreislauf den ersten Verbindungswärmetauscher (6) und den zweiten Verbindungswärmetauscher (7) integriert und einen Luftwärmetauscher (18), durch den die Luft (21), die dem Innenraum des Kraftfahrzeugs (1) zugeführt werden soll, temperierbar ist, ausschließt und
- in einem zweiten Transferkreislauf den ersten Verbindungswärmetauscher (6) und den Luftwärmetauscher (18) integriert und den zweiten Verbindungswärmetauscher (7) ausschließt,
wobei mittels des Verteilsystems eine bedarfsweise Verteilung des Transferfluids auf den ersten Transferkreislauf und/oder den zweiten Transferkreislauf einstellbar ist.

10. Kraftfahrzeug (1) gemäß einem der vorhergehenden Ansprüche, **gekennzeichnet durch** einen zweiten Heizungswärmetauscher (4), wobei der erste Heizungswärmetauscher (4) und der zweite Heizungswärmetauscher (4) in paralleler Anordnung in das Temperiersystem (3) integriert sind.

11. Kraftfahrzeug (1) gemäß einem der vorhergehenden Ansprüche, **gekennzeichnet durch** einen Zuheizer (14), der in einen den Heizungswärmetauscher (4) und den ersten Verbindungswärmetauscher (6) umfassenden Temperierkreis integriert oder integrierbar ist.

## Claims

1. Motor vehicle (1) comprising a thermal management system which comprises
- a temperature control system (3) in which
• a plurality of functional components (2) to be temperature-controlled,
• an ambient heat exchanger (5) and
• a heating heat exchanger (4), by means of which air (21) intended to be supplied to an interior of the motor vehicle (1) can be temperature-controlled,
are integrated,
wherein each of the functional components (2) and the heating heat exchanger (4) can be connected, by means of a distribution system, alternately to a first connecting heat exchanger (6) and a second connecting heat exchanger (7) to form temperature control circuits in each of which a temperature control fluid can be conveyed in a circuit by means of at least one temperature control fluid conveying device (8), wherein the distribution system comprises a first distribution device (9) which is or can be connected exclusively to the first connecting heat exchanger (6), and a second distribution device (10) which is or can be connected exclusively to the second connecting heat exchanger (7), and wherein the ambient heat exchanger (5) is or can be integrated at least into a temperature control circuit comprising the first connecting heat exchanger (6),
and
- a transfer system (15) which is fluidically separated from the temperature control system (3) and which integrates, in a (first) transfer circuit, a transfer fluid conveying device (16) for conveying transfer fluid, the first connecting heat exchanger (6) and the second connecting heat exchanger (7).

2. Motor vehicle (1) according to claim 1, **characterized in that** the transfer fluid conveying device (16) is designed as a compressor and the (first) transfer circuit additionally integrates a throttle (17).

3. Motor vehicle (1) according to either of the preceding claims,
**characterized in that** the ambient heat exchanger (5) is or can be integrated in at least one temperature control circuit comprising the second connecting heat exchanger (7).

4. Motor vehicle (1) according to any of the preceding claims,
**characterized in that** the functional components (2) are at least two from the group comprising an electric traction motor (2a), power electronics (2c), a traction energy source (2b), a charger (2e) and a thermal management system controller (2d).

5. Motor vehicle (1) according to claim 4, **characterized in that** the traction energy source (2b) and the traction motor (2a) are integrated in the temperature control system in a parallel arrangement.

6. Motor vehicle (1) according to claim 4 or claim 5, **characterized in that,** on the one hand, the traction motor (2a) and/or at least one functional component (2) of the group comprising the power electronics (2c), the charger (2e) and the thermal management system controller (2d) and, on the other hand, a combination of the ambient heat exchanger (5) and an ambient heat exchanger bypass (5a) are integrated in the temperature control system (3) in a serial arrangement.

7. Motor vehicle (1) according to any of the preceding claims,
**characterized in that** one of the functional components (2) is a/the traction energy source (2b), it being possible to convey temperature control medium in a shorting circuit which comprises the traction energy source (2b) and excludes the connecting heat exchangers (6, 7) and the other functional component(s) (2).

8. Motor vehicle (1) according to any of the preceding claims,
**characterized in that** the first distribution device (9) and/or the second distribution device (10) is/are designed as a rotary slide valve and/or linear slide valve.

9. Motor vehicle (1) according to any of the preceding claims,
**characterized in that** the transfer system (15)
- in the first transfer circuit, integrates the first connecting heat exchanger (6) and the second connecting heat exchanger (7) and excludes an air heat exchanger (18) by means of which the air (21) intended to be supplied to the interior of the motor vehicle (1) can be temperature-controlled, and
- in a second transfer circuit, integrates the first connecting heat exchanger (6) and the air heat exchanger (18) and excludes the second connecting heat exchanger (7),
it being possible to use the distribution system to adjust the distribution of the transfer fluid to the first transfer circuit and/or the second transfer circuit as required.

10. Motor vehicle (1) according to any of the preceding claims,
**characterized by** a second heating heat exchanger (4), the first heating heat exchanger (4) and the second heating heat exchanger (4) being integrated in the temperature control system (3) in a parallel arrangement.

11. Motor vehicle (1) according to any of the preceding claims,
**characterized by** an auxiliary heater (14) which is or can be integrated in a temperature control circuit comprising the heating heat exchanger (4) and the first connecting heat exchanger (6).

## Revendications

1. Véhicule automobile (1) comportant un système de gestion thermique qui comprend
- un système de régulation de température (3), dans lequel
• une pluralité de composants fonctionnels (2) à réguler en température,
• un échangeur de chaleur ambiant (5) et
• un échangeur de chaleur de chauffage (4), par lequel de l'air (21), qui doit être amené à un espace intérieur du véhicule automobile (1), peut être régulé en température,
sont intégrés,
dans lequel chacun des composants fonctionnels (2) et l'échangeur de chaleur de chauffage (4) peuvent être reliés par le biais d'un système de distribution alternativement à un premier échangeur de chaleur de liaison (6) ainsi qu'à un second échangeur de chaleur de liaison (7) pour former des circuits de régulation de température, dans lesquels un fluide de régulation de température peut être transporté respectivement dans un circuit par le biais d'au moins un dispositif de transport de fluide de régulation de température (8), dans lequel le système de distribution comprend un premier dispositif de distribution (9), qui est relié ou peut être relié exclusivement au premier échangeur de chaleur de liaison (6), et un second dispositif de distribution (10), qui est relié ou peut être relié exclusivement au second échangeur de chaleur de liaison (7), et dans lequel l'échangeur de chaleur ambiant (5) est intégré ou intégrable au moins dans un circuit de régulation de température comprenant le premier échangeur de chaleur de liaison (6),
et
- un système de transfert (15) séparé fluidiquement du système de régulation de température (3), qui intègre dans un (premier) circuit de transfert un dispositif de transport de fluide de transfert (16) pour le transport de fluide de transfert, le premier échangeur de chaleur de liaison (6) et le second échangeur de chaleur de liaison (7).

2. Véhicule automobile (1) selon la revendication 1, **caractérisé en ce que** le dispositif de transport de fluide de transfert (16) est réalisé comme un compresseur et le (premier) circuit de transfert intègre en outre un étranglement (17).

3. Véhicule automobile (1) selon l'une des revendications précédentes,
**caractérisé en ce que** l'échangeur de chaleur ambiant (5) est intégré ou intégrable dans au moins un circuit de régulation de température comprenant le second échangeur de chaleur de liaison (7).

4. Véhicule automobile (1) selon l'une des revendications précédentes,
**caractérisé en ce que** les composants fonctionnels (2) sont au moins deux parmi le groupe comprenant un moteur de traction (2a) électrique, une électronique de puissance (2c), une source d'énergie de traction (2b), un appareil de charge (2e) et une commande de système de gestion thermique (2d).

5. Véhicule automobile (1) selon la revendication 4, **caractérisé en ce que** la source d'énergie de traction (2b) et le moteur de traction (2a) sont intégrés dans le système de régulation de température dans un agencement parallèle.

6. Véhicule automobile (1) selon la revendication 4 ou 5,
**caractérisé en ce que,** d'une part, le moteur de traction (2a) et/ou au moins un composant fonctionnel (2) du groupe comprenant l'électronique de puissance (2c), l'appareil de charge (2e) et la commande de système de gestion thermique (2d) et, d'autre part, une combinaison de l'échangeur de chaleur ambiant (5) et d'une dérivation d'échangeur de chaleur ambiant (5a) sont intégrés dans le système de régulation de température (3) selon un agencement série.

7. Véhicule automobile (1) selon l'une des revendications précédentes,
**caractérisé en ce que** l'un des composants fonctionnels (2) est une/la source d'énergie de traction (2b), dans lequel un agent de régulation de température peut être transporté dans un circuit de court-circuit entourant la source d'énergie de traction (2b) et excluant les échangeurs de chaleur de liaison (6, 7) ainsi que le ou les autres composants fonctionnels (2).

8. Véhicule automobile (1) selon l'une des revendications précédentes,
**caractérisé en ce que** le premier dispositif de distribution (9) et/ou le second dispositif de distribution (10) est/sont réalisé(s) comme une vanne à tiroir rotatif et/ou une vanne à tiroir linéaire.

9. Véhicule automobile (1) selon l'une des revendications précédentes,
**caractérisé en ce que** le système de transfert (15)
- intègre dans le premier circuit de transfert le premier échangeur de chaleur de liaison (6) et le second échangeur de chaleur de liaison (7) et exclut un échangeur de chaleur d'air (18) par lequel l'air (21) qui doit être amené à l'espace intérieur du véhicule automobile (1) peut être régulé en température et
- intègre dans un second circuit de transfert le premier échangeur de chaleur de liaison (6) et l'échangeur de chaleur d'air (18) et exclut le second échangeur de chaleur de liaison (7),
dans lequel une répartition du fluide de transfert sur le premier circuit de transfert et/ou le second circuit de transfert peut être réglée en fonction des besoins par le biais du système de distribution.

10. Véhicule automobile (1) selon l'une des revendications précédentes,
**caractérisé par** un second échangeur de chaleur de chauffage (4), dans lequel le premier échangeur de chaleur de chauffage (4) et le second échangeur de chaleur de chauffage (4) sont intégrés dans le système de régulation de température (3) selon un agencement parallèle.

11. Véhicule automobile (1) selon l'une des revendications précédentes,
**caractérisé par** un réchauffeur d'appoint (14) intégré ou intégrable dans un circuit de régulation de température comprenant l'échangeur de chaleur de chauffage (4) et le premier échangeur de chaleur de liaison (6).
